# EUROPÄISCHE PATENTSCHRIFT

(11) **EP 0 797 053 B1**
(45) Veröffentlichungstag und Bekanntmachung des Hinweises auf die Patenterteilung: **04.12.2002**
(21) Anmeldenummer: 97810151.7
(22) Anmeldetag: 17.03.1997
(51) Int. Cl.: F24D 3/10, F24D 11/00, F24D 19/10

(54) **Verteiler für einen Flüssigkeitsstrom in einer Heizungsanlage**
Distributor for a fluid flow in a heating installation
Distributeur pour un courant de liquide dans une installation de chauffage

(30) Priorität: 18.03.1996 CH 70296
(43) Veröffentlichungstag der Anmeldung: 24.09.1997
(73) Patentinhaber: GIACOMINI S.p.A., 28017 S. Maurizio d'Opaglio (NO) (IT)
(72) Erfinder: Giacomini, Marco, 28016 Orta San Giulio (IT)
(74) Vertreter: Gaggini, Carlo, Dipl.-Ing.

(56) Entgegenhaltungen:
- CH-A- 657 691
- DE-A- 2 948 417
- FR-A- 2 364 411
- US-A- 4 049 045
- US-A- 4 137 900

## Beschreibung

Die vorliegende Erfindung betrifft einen Verteiler für einen Flüssigkeitsstrom in einer Heizungsanlage gemäss dem Oberbegriff des Patentanspruchs 1.

In der Anwendungspraxis ist heute die Verwendung von Heizungskreisläufen bekannt, die ausser einer Energiequelle und den erforderlichen Verbraucherapparaten, normalerweise Heizkörper, auch einen Energiespeicher umfassen, dank welchem die erzeugte oder von der Energiequelle gelieferte Energie gespeichert werden kann, wenn der Bedarf kleiner ist, so dass sie später zu einem günstigeren Zeitpunkt wieder verwendet werden kann. So ist bekannt, dass beispielsweise in elektrisch beheizten Anlagen, in denen die Niedertarif-Zeiten besser ausgenützt werden sollen, und insbesondere in Anlagen mit Sonnenkollektoren die Energie, die während der heissen Zeiten tagsüber anfällt, während welcher der Heizenergiebedarf zum vornherein niedriger ist, eine Speicherung dieser Energie während diesen Zeiten erforderlich ist, die später während kälteren Zeiten des Tages bzw. während der Nacht, oder in bestimmten Anlagen grosser Kapazität auch während der kühleren Jahreszeiten wiederverwendet werden kann.

Ein Speichersystem für Wärmeenergie in Kombination mit einer Energiequelle ist z.B. aus DE-A-2700822 bekannt. Gemäss diesem Verfahren besteht der Speicher aus einer in einer Wärmespeichermasse, in der Praxis im Erdreich, auf dem das Haus steht, ausgelegten Rohrschlange, die als in einer horizontalen Ebene um sich selbst aufgewundene Spirale ausgebildet ist. Die Wärmeträgerflüssigkeit, in der Regel Wasser, durchströmt die Rohrschlange vom Zentrum zum äusseren Ende der Rohrschlange. Bei diesem System werden die Wärmeverluste minimal gehalten, da das Erdreich als Wärmespeichermasse in konzentrischen Kreisen von innen nach aussen aufgewärmt wird, so dass der Temperaturgradient, der sich vom Inneren zum Aeusseren der Spirale ergibt, als nutzbare Wärme ausgenützt werden kann, bis im Extremfall der ganze Wärmespeicher ganz aufgeheizt ist, d.h. bis die Temperatur am Speicherrand jene des Kembereichs des Speichers erreicht hat. Dank diesem System können die Wärmeverluste möglichst klein gehalten werden, da beim Wiederabgeben der gespeicherten Wärme aus dem Speicher die kalte Wärmeträgerflüssigkeit in umgekehrter Richtung durch den Speicher geschickt wird, also vom äusseren Ende der Schlange zum Zentrum, wodurch dank der Strömung gegen die Richtung des Temperaturgefälles in der Speichermasse des Speichers, möglichst viel Energie als nutzbare Wärme zurückgewonnen wird, wobei die Wärmeverluste minimal gehalten werden.

Dieses System kann in der Anwendungspraxis weiter verbessert werden, indem anstelle einer einzigen Rohrschlange, die von Wärmeträgerflüssigkeit während des Speichems vom Zentrum aus nach aussen durchströmt ist, und von aussen nach innen während der Rückgewinnung der eingespeicherten Wärme, mindestens drei in einer im Wesentlichen horizontalen Ebene konzentrisch angeordnete Rohrschlangen vorgesehen sind, deren erste vom Zentrum aus gespeist wird, während die beiden anderen dort beginnen, wo die vorhergehende endet bzw. dort endet, wo die nächste beginnt.

In der innersten Rohrschlange, die zur besseren Klarheit im Folgenden als "erste Rohrschlange" benannt ist, zirkuliert die wärmste Flüssigkeit, während in den weiter aussen liegenden, auf die erste folgenden Rohrschlangen, die als "zweite", "dritte", usw., benannt sind, die kältere Flüssigkeit zirkuliert. Dies bezweckt, in der Speichermasse, d. h. im Erdreich unter dem Wohnhaus, einen gesteuerten Temperaturgradienten zu erreichen, wobei die Temperatur in der Speichermasse vom Zentrum nach aussen hin, d. h. über eine in der Regel kreisförmige Fläche beliebiger Ausdehnung abnimmt. Ein solches System mit mehreren konzentrischen Kreisläufen ist durch die DE-A-294 84 17 bekannt: Diese Schrift enthält jedoch keine Angaben über die technische Ausgestaltung des Verteilers, ausser dass eine Schaltungslogik die steuerbaren Ventile steuert.

Dank der Anordnung verschiedener konzentrischer Kreisläufe, durch welche die Flüssigkeit in verschiedenen Temperaturbereichen zirkuliert, die so gesteuert sind, dass sie verschieden, aber benachbart sind - in solcher Weise, dass die Arbeitstemperatur in einem Kreislauf im Wesentlichen nicht mit jener in den benachbarten Kreisläufen überlappt - kann das aus DE-A-270 08 22 bekannte Prinzip, das mit nur einem Kreislauf arbeitet, optimiert werden, wodurch der thermische Wirkungsgrad der Anlage weiter verbessert wird.

Ziel der vorliegenden Erfindung ist daher, einen Verteiler für einen Flüssigkeitsstrom in einer Heizungsanlage mit einer Energiquelle und mit einem Energiespeicher vorzuschlagen, der mindestens drei und vorzugsweise vier oder mehr getrennte Kreisläufe umfasst, wobei der Verteiler sicherstellt, dass sich in den einzelnen Rohrschlangen, deren Energie im Speicher von innen nach aussen abnimmt, da der kälteste Flüssigkeitsstrom systematisch zur äussersten Rohrschlange bzw. zum äussersten getrennten Kreislauf geleitet wird, während der wärmste zur innersten Rohrschlange geleitet wird, wobei der Uebergang von einer Rohrschlagen zur anderen temperaturmässig möglichst genau erfolgen muss.

Dies bedeutet, dass der Flüssigkeitsstrom von einem der getrennten Kreisläufe zum folgenden geleitet werden muss, angefangen beispielsweise beim aussenliegenden kältesten Kreislauf, mit markanten Temperaturstufen, damit Temperatur-Ueberlappungen zwischen den getrennten Kreisläufen vermieden werden. Ferner muss der Verteiler einfach konstruiert sein, zuverlässig funktionieren und nur minimale Wartung erheischen.

Diese Zielsetzungen werden mit einem Verteiler für einen Flüssigkeitsstrom gemäss dem Oberbegriff des Patentanspruchs 1 erfüllt dank den Eigenschaften gemäss dem charakterisierenden Teil des Patentanspruchs 1.In einer ersten bevorzugten Ausführungsform der vorliegenden Erfindung umfasst die Heizungsanlage einen Energiespeicher, der aus vier getrennten Kreisläufen besteht, während der Verteiler drei Dreiwegventile umfasst. Dies ermöglicht den Bau von Energiespeichern mit einer fein gesteuerten Energieverteilung in der Speichermasse, wobei hier zu bemerken ist, dass die Anzahl der verwendeten Kreisläufe grundsätzlich beliebig gross sein kann, allerdings unter Berücksichtigung der zur Verfügung stehenden Fläche, der Einrichtungskosten, der erreichten Leistungsfähigkeit, usw. Wesentlich ist im Rahmen der vorliegenden Erfindung lediglich, dass die Anzahl der Kreisläufe grösser als zwei und die Anzahl der verwendeten Dreiwegventile immer kleiner als jene der getrennten Kreisläufe sein soll. Die Erfahrung hat gezeigt, dass die Anzahl von vier Kreisläufen mit drei Dreiwegventilen in den allermeisten praktischen Anwendungsfällen eine optimale Lösung darstellt.

Bei einer anderen bevorzugten Ausführungsform der vorliegenden Erfindung sind die Dreiwegventile mit einem Ausdehnungs-Thermostaten ausgerüstet, der auf die Temperatur der durchströmenden Flüssigkeit reagiert. Dies erlaubt den Bau von Verteilern, die ohne äussere Energiezufuhr auskommen, da die verwendeten Thermostaten von der Art der sogenannten Wachs- oder Ausdehnungs-Thermostaten direkt auf die Temperaturveränderungen ansprechen, und nicht von aussen z.B. mit elektrischer Energie gespeist werden müssen, wie etwa Magnetventile. Dieser Aspekt ist wichtig, wenn hohe Funktionssicherheit der ganzen Anlage gewährleistet werden soll.

Eine bevorzugte Anwendung des erfindungsgemässen Verteilers, wie sie im Anspruch 6 beansprucht wird, sieht vor, dass die Anlage eine Solarenergie-Anlage ist, deren Energiequelle aus einer Anordnung von Sonnenkollektoren auf dem Dach und/oder an den Wänden besteht, und mit einem Energiespeicher, der mindestens drei getrennte Kreisläufe umfasst, in denen die Flüssigkeit in getrennten, aber benachbarten Temperaturbereichen zirkuliert. Dieses Anwendungsfeld erweist sich als ideal für den erfindungsgemässen Verteiler, da besonders in solchen Anlagen von mehreren, von Flüssigkeitsströmen auf verschiedenen Temperaturniveaus durchströmten Kreisläufen optimal Gebrauch gemacht wird, insbesondere wenn, wie im Anspruch 7 beansprucht, mit getrennten, im Erdreich unter dem Gebäude in der Form konzentrischer Spiralen angeordneten Kreisläufen, die eine neben der anderen in einer horizontalen Ebene angeordnet sind.

Weitere Ausführungsvarianten gemäss dem Erfindungskonzept sind Gegenstand der übrigen Ansprüche und werden im Folgenden anhand einiger illustrierter Ausführungsbeispiele der vorliegenden Erfindung näher erklärt. Es zeigen:
- Fig. 1 eine schematische Darstellung im Grundriss und in einer Seitenansicht einer Solar-Heizungsanlage mit Erdwärmespeicher zur Erklärung einer typischen Anwendung des erfindungsgemässen Verteilers;
- Fig. 2 ein Verteiler für einen Flüssigkeitsstrom mit zwei Ventilen entsprechend der Erfindung, mit einem Einlass und drei Auslässen, d.h. ein Verteiler zur Beschickung von drei getrennten Kreisläufen;
- Fig. 3 eine ähnliche Darstellung wie in der Fig. 2, aber mit drei miteinander verbundenen Ventilen, die einen Verteiler mit einem Einlass und mit vier Auslässen zur Beschickung von vier getrennten Kreisläufen bilden.

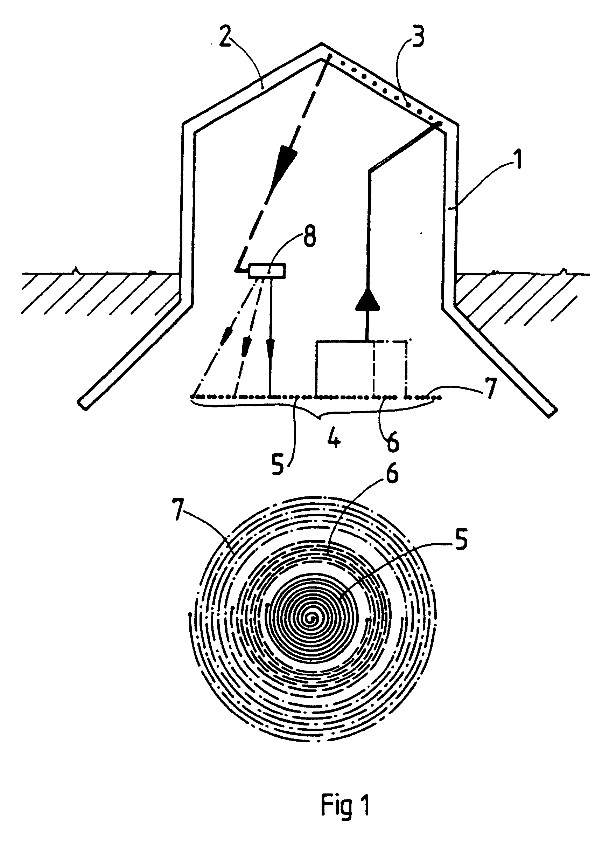

In der Fig. 1 ist schematisch, oben im Aufriss und unten im Grundriss, eine charakteristische Anwendung des erfindungsgemässen Verteilers dargestellt. Dabei handelt es sich um seine Verwendung im Rahmen einer Solar-Heizungsanlage für ein normales Wohnhaus, beispielsweise für ein Einfamilienhaus.

Die Gebäudestruktur ist mit 1 bezeichnet, in deren Dach 2 ein Energiequellen-Element eingebaut ist, beispielsweise ein herkömmlicher Sonnenkollektor 3. Die Wärme wird dabei mittels einer Wärmeträgerflüssigkeit, beispielsweise Wasser, aufgenommen, das in einem Röhrensystem zirkuliert. Im Erdreich unter dem Haus ist ein Röhrensystem angeordnet, das als Gesamtheit den Energiespeicher 4 bildet. Der Energiespeicher 4 umfasst im dargestellten Fall drei getrennte Kreisläufe 5, 6 und 7, deren innerster Kreislauf 5 aus einer spiralförmig in einer horizontalen Ebene in einer Bodentiefe von mindestens 2 m unter dem Boden des Hauses ausgelegten Rohrschlange besteht. Das eine Ende der Rohrspirale liegt am äussersten Punkt der Spirale und das andere Ende in deren Zentrum. Zur Speicherung von Energie im Erdreich durchströmt die heisse Flüssigkeit, die von der auf dem Dach 2 angebrachten Energiequelle 3 herkommt, die Rohrspirale des Kreislaufs 5 von aussen nach innen, d.h. von ihrer äussersten Windung zum Zentrum der Spirale. Es ist bekannt, dass dieser innerste Kreislauf durch die heisseste von der Wärmequelle herkommende Flüssigkeit erwärmt werden muss, damit die Wärmeverluste möglichst klein gehalten werden können. Die Temperatur t₅ der Flüssigkeit, die diesen Kreislauf durchströmt, liegt typischerweise über 35°C, d.h. t₅ > 35°C.

Die zweite Spirale, die den zweiten getrennten Kreislauf 6 bildet, wird von einer ebenfalls spiralförmig ausgelegten und im wesentlichen mit dem Kreislauf 5 koplanaren und ausserhalb dessen Spirale angeordneten Rohrleitung gebildet: Dieser zweite Kreislauf beginnt also am äussersten Punkt der Spirale 6 und endet in der Nachbarschaft des inneren Kreislaufs 5. Auch dieser zweite Kreislauf wird zur Wärmespeicherung von aussen nach innen durchströmt von Flüssigkeit, die von der Energiequelle herkommt, und deren Temperatur zwischen zwei festgelegten Grenzen liegt, deren obere tiefer liegt als jene, auf der der getrennte Kreislauf 5 gespeist wird, d.h. im hier beschriebenen Beispiel unter 35°C. In der Praxis wird der Kreislauf 6 mit Flüssigkeit gespeist, deren Temperatur t₆ beispielsweise einer Stufe im Bereich von 15°C < t₆ < 35°C liegen sollte.

Der letzte getrennte Kreislauf 7, der äusserste, wird ebenfalls von einer koplanar mit den vorerwähnten Kreisläufen 5 und 6 angeordneten Spirale gebildet, die ausserhalb der Spirale des Kreislaufes 6 liegt: Die Rohrspirale 7 beginnt am äussersten Punkt und endet in der Gegend der Spirale des getrennten Kreislaufes 6. In diesen äussersten Kreislauf 7 wird, wie es aus der Praxisanwendung bekannt ist, die Flüssigkeit aus der Energiequelle geleitet, wenn sie am kältesten ist und auch die minimale Temperatur, im hier beschriebenen Beispiel nämlich 15°C, nicht mehr erreicht. Dies bedeutet, dass die Temperatur t₇ der im Kreislauf 7 zirkulierenden Flüssigkeit im hier beschriebenen Beispiel der Bedingung t₇ < 15°C genügen muss. Wenn also die Flüssigkeit in der Wärmequelle auf weniger als 15°C erwärmt wird, muss sie in die äusserste Spirale geleitet werden, die den Kreislauf 7 bildet.

Hier sei festgehalten, dass die Anzahl der getrennten Kreisläufe, die zusammen den Energiespeicher bilden, und die Temperaturbereiche der erwähnten Flüssigkeitsströme, und die Auslegung der entsprechenden einzelnen Kreisläufe im Verhältnis zueinander im Rahmen der vorliegenden Erfindung lediglich Beispielcharakter haben und hier lediglich angegeben sind, um die Lösung bzw. die zu erreichenden Ziele der Erfindung besser verständlich zu machen. Das Ziel der Erfindung liegt darin, einen Verteiler für den Flüssigkeitsstrom zu schaffen, der erlaubt, eine Flüssigkeit, die von einer beliebigen Energiequelle herkommt, auf mehrere Kreisläufe aufzuteilen, wobei die Flüssigkeit gemäss den Temperaturbereichen aufgeteilt wird, in der Absicht, die Flüssigkeit unter möglichst geringem Energieverlust zu speichern. Die Auslegung der Kreisläufe in Form koplanarer Spiralen im Erdreich unter dem Gebäude, die eingesetzte Anzahl getrennter Kreisläufe, usw., können im Rahmen der vorliegenden Erfindung verschieden gewählt werden, obwohl die Praxis zeigt, dass eine Anzahl von vier Kreisläufen, nämlich von spiralförmigen, sich koplanar im Erdreich unter dem Gebäude estreckenden Kreisläufen, als ideal betrachtet werden kann. Aber der Anwendung der vorliegenden Erfindung in anderen Auslegungen getrennter Kreisläufe steht nichts im Wege, solange diese mit Flüssigkeiten gespeist werden müssen, deren Temperaturen innerhalb genau festgelegter und Grenzen liegen, die nebeneinander liegen, ohne sich zu überschneiden. Der mit 8 bezeichnete Verteiler für einen Flüssigkeitsstrom gemäss der vorliegenden Erfindung muss daher grundsätzlich einigen Hauptanforderungen genügen, wobei er nämlich:
- einfach konstruiert, wartungsfrei und kostengünstig sein muss,
- eine möglichst genaue Trennung sicherstellen muss, nämlich zwischen zwei aufeinanderfolgende Kreisläufen innerhalb genau festgelegter Temperaturbereichen der Flüssigkeit. Als Grössenordnung für diese Bedingung ist etwa 2°C vorzugeben, was heute mit Hilfe bekannter modernster Ausdehnungs-Thermostaten erreicht werden kann, deren grosser Vorteil darin besteht, dass sie ohne äussere Energieversorgung funktionieren.

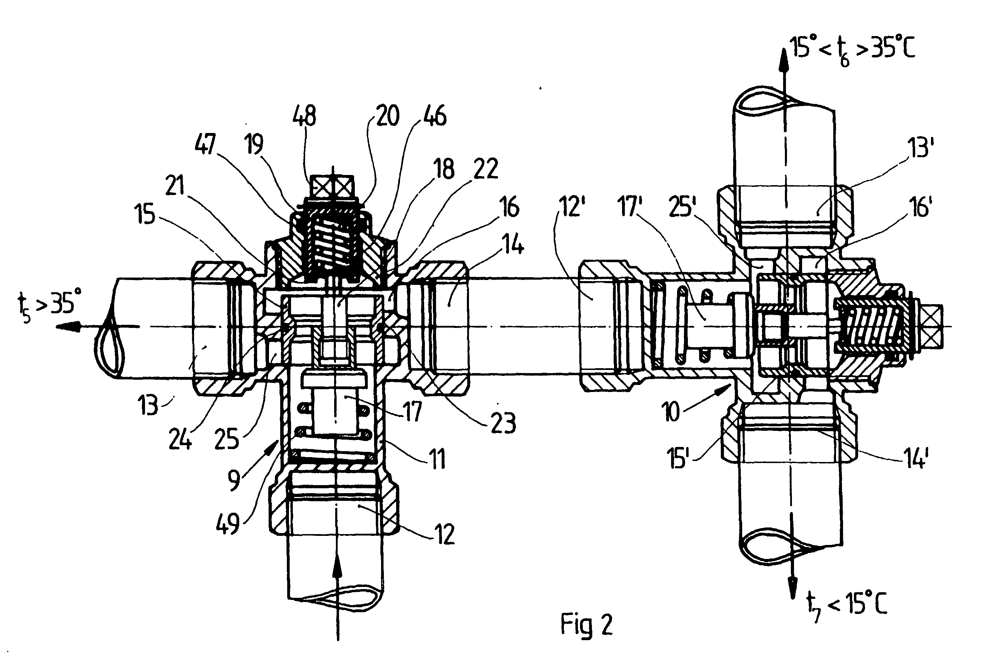

Der Verteiler für einen Flüssigkeitsstrom 8 in einer Anlage gemäss der Fig. 1 ist in der Fig. 2 im detaillierter dargestellt, in welcher zwei Thermostatventile 9 und 10 gleicher Bauart gezeigt sind, so dass die Beschreibung des Ventils 9 auch für alle Einzelheiten des Ventils 10 gilt.

Das Ventil 9 umfasst einen Ventilkörper 11, der beispielsweise aus warmgepresstem Messing besteht. Der Ventilkörper 11 weist drei Oeffnungen auf, es handelt sich also um ein Dreiwegventil: ein Einlass 12 und zwei Auslässe 13 und 14. Die Auslässe 13 und 14 können wechselweise durch den in eine seiner beiden Endlagen gebrachten Schieber 15 abgesperrt werden; in der Fig. 2 ist der Schieber 15 in seiner unteren Endstellung dargestellt, die auch seine Ruhestellung ist, und in welcher die Flüssigkeit, welche durch die Kammer 16 fliesst, dank dem Thermostaten 17 zum Auslass 14. Der Thermostat ist mit seinem Stift 18 in der mit dem Ventilkörper 11 des Ventils 9 verbundenen Büchse 19 mittels eines mit einem Gewinde versehenen Deckels 22 befestigt. Mittels einer Druckfeder 20 wird der Stift dauernd mit dem unteren Anschlag 21 der Büchse 19 in Kontakt gehalten, wobei der Stift 18 und die Büchse 19 in der Regel eine Einheit bilden. Nur falls erforderlich, d.h. wenn der Thermostat 17 den Schieber 15 nach oben über seinen Anschlag hinaus gegen den mit einem Gewinde versehenen Deckel 22 drückt, und falls die vom Thermostat 17, in der Regel einem Wachs-Ausdehnungs-Thermostat, ausgeübten Kräfte sehr gross werden, wenn die sich infolge der Erhitzung ausdehnende Substanz an ihrer Ausdehnung gehindert wird, kann sich der Stift 18 gegenüber der Büchse 29 so verschieben, dass übermässige Spannungen vermieden werden, indem der Widerstand der Druckfeder 20 überwunden wird, der somit die grösstmögliche Kraft darstellt, mit welcher der Schieber 15 von unten her gegen den mit einem Gewinde versehenen Deckel 22 stossen kann. Der Schieber 15 bewegt sich im Schiebesitz 23 des Ventilkörpers 11 und ist mit einem abdichtenden Dichtungsring 24 versehen.

Der Thermostat 17 des Ventils 9 ist ein Thermostat, der in der Lage ist, den Schieber 15 aus seiner in der Fig. 2 dargestellten unteren Ruhelage in seine obere Lage im Anschlag gegen den mit einem Gewinde versehenen Deckel 21 zu verschieben (die im Sinn eines Beispiels im Fall des Ventils 10 gezeigt ist, welches genau gleich wie das Ventil 9 gebaut ist), wobei der Ansprechbereich der Temperaturschwankung des Flüssigkeitsstroms äusserst eng gehalten ist. Solche präzise Thermostaten sind heute im Handel erhältlich und finden allgemein Anwendung. Der in der Fig. 1 gezeigte Thermostat 17 beispielsweise ist vorgesehen, um den Schieber 15 bei einer Temperaturänderung zwischen 33°C und 35°C von der einen Endlage in die andere zu verschieben, d.h. innerhalb eines Temperaturbereichs von bloss 2°C. Somit bleibt bis zu einer Temperatur von 33°C der Schieber 15 in seiner in der Fig. 2 gezeigten unteren Ruhelage; zwischen 33°C und 35°C Flüssigkeitstemperatur verschiebt der Thermostat bei Ausdehnung der auf Wärme reagierenden Substanz den Schieber 15 in seine oberste Endlage am Anschlag gegen den mit einem Gewinde versehenen Deckel 22. Steigt die Flüssigkeitstemperatur über 35°C, so gelangt die durch den Einlass 12 des Ventils 9 eintretende Flüssigkeit aus der Kammer 25 des Ventils 9 aus und verlässt das Ventil 9 durch den Auslass 13, durch welchen also nur ein Flüssigkeitsstrom passieren kann, dessen Temperatur (abgesehen von der kurzen Zeitspanne während welcher der Schieber 15 bei einer Temperatur zwischen 33°C und 35°C nach oben verschoben wird, und während welcher die Flüssigkeit sowohl durch den Auslass 13 als auch durch den Einlass des Ventils 10 treten kann, wie dies im Folgenden noch beschrieben wird) über 35°C liegt. Der Auslass 13 ist, in der Anordnung des getrennten Kreislaufs wie sie in der Fig. 1 gezeigt ist, mit dem innersten Kreislauf 5 verbunden, weshalb die Temperatur der aus dem Auslass 13 austretenden Flüssigkeit mit t₅ bezeichnet wird, für die t₅ > 35°C gilt.

Für bessere Verständlichkeit sind die in den Dreiwegventilen 9 und 10 vollständig gleichen Elemente mit den gleichen Bezugsziffern bezeichnet, jene des Ventils sind jedoch zusätzlichen mit einem Apostroph gekennzeichnet. Die Funktion des Ventils 10 entspricht genau jener des beschriebenen Ventils 9, wobei das Ventil 10 mit einem Thermostat 17' ausgerüstet ist, der den Schieber 15' in seine Lage bringt, in der die untere Kammer 25' abgesperrt und die obere Kammer 16' geöffnet sind, solange der Flüssigkeitsstrom die Mindesttemperatur, die im beschriebenen Beispiel auf 15°C festgesetzt ist, noch nicht erreicht hat, und stösst den Schieber 15' in seine die obere Kammer 16' absperrende Lage (wobei sich die Ausdrücke unten und oben auf die Lage relativ zum Einlass 12' des Ventils 10' beziehen, so dass in der Fig. 2 die untere Stellung des Schiebers 15' links in der Abbildung erscheint, und seine obere Stellung rechts dargestellt ist, weil das Ventil 10 mit horizontal verlaufender Achse des Schiebers 15' dargestellt ist), sobald die Flüssigkeit Temperatur-Werte zwischen beispielsweise 13°C und 15°C erreicht hat. Bis zu einer Flüssigkeits-Temperatur von 13°C verbleibt der Schieber 15' also in seiner Stellung, in der die Kammer 16' geöffnet und die Kammer 25' abgesperrt sind, bzw. in der gegen den Thermostaten 17' gezogenen Stellung. Zwischen 13°C und 15°C verschiebt der Thermostat 17' den Schieber 15' von der vorerwähnten Stellung in seine andere mögliche Stellung, die im Sinn eines Beispiels in der Fig. 2 dargestellt ist, in der die Kammer 25' geöffnet und die Kammer 16' abgesperrt sind. Während der Zeitspanne, die man so kurz wie möglich zu halten sucht, indem man die Temperaturbereich der Reaktion (z.B. 2°C) möglichst weitgehend reduziert, stehen beide Kammern 16' und 25' offen, so dass die Flüssigkeit sowohl in die eine als auch in die andere Kammer eintreten kann, und somit sowohl durch den Auslass 13' als auch durch den Auslass 14' des Ventils 10 fliessen kann.

In dieser Uebergangsphase werden daher sowohl der getrennte Kreislauf 6 (der in der Fig. 1 als mittlerer Kreislauf dargestellt ist) als auch der getrennte Kreislauf 7. Abgesehen vom kleinen Temperaturintervall (von etwa 2°C im dargestellten Beispiel, einem Wert, der nur vom gewählten Typ des Thermostaten 17 bzw. 17' abhängt) wird somit erreicht, dass aus dem Auslass 13' des Ventils 10, der mit der Kammer 25' in Verbindung steht, die aus der Wärmequelle 3 herkommende Flüssigkeit (über den entsprechenden Anschluss) in die mittlere Rohrschlange 6 des Wärmespeichers übertritt, sobald seine Temperatur t₆ der Bedingung 35°C < t₆ < 35°C genügt, während aus dem Auslass 14' des Ventils 10 Flüssigkeit austritt, um den getrennten äussersten Kreislauf 7 des Wärmespeichers zu durchlaufen, sobald die Flüssigkeitstemperatur den vorgesehenen Mindestwert, im Fall des beschriebenen Beispiels t₇ < 15°C. Obschon, wie bereits angetönt, der Thermostat 17' bei 13°C zu reagieren beginnt und der Schieber 15 sich aus der Stellung, in der die Kammer 25' geschlossen und die Kammer 16' geöffnet sind, in die entgegengesetzte Stellung zu verschieben beginnt, fliesst zum Kreislauf 6 bereits bei der Temperatur von 13°C Flüssigkeit, da Flüssigkeit mit einer Temperatur zwischen 13°C und 15°C bereits während der Dauer der Umschaltphase des Ventils 10 sowohl durch den Auslass 14' als auch durch den Auslass 13' austritt.

Daher ist ein kennzeichnendes Merkmal der vorliegenden Erfindung, dass die Schieber 15, 15' der Ventile 9 bzw. 10, die in der allgemeinsten Anwendungsform gemäss der Fig. 2 - wie auch die analogen Schieber der Ventile in der im Folgenden zu beschreibenden komplexeren Ausführungsform in Wärmespeichersystemen mit mehr als drei getrennten Kreisläufen - Verwendung finden, sich aus ihrer Stellung, in der ein Auslass 13 bzw. 13' geschlossen sind, in eine Stellung verschieben, in welcher der andere Auslass 14 bzw. 14' geschlossen ist, innerhalb eines kleinstmöglichen Veränderungsbereichs ihrer Arbeitstemperatur von 3°C und vorzugsweise, wie im beschriebenen Fall des in den Figuren 1 und 2 gezeigten Beispiels, von 2°C.

Der Verteiler für einen Flüssigkeitsstrom, wie er anhand der Ausführungsform gemäss den Figuren 1 und 2 beschrieben ist, zur Speisung eines Energiespeichers, der drei getrennte Kreisläufe 5, 6, 7 umfasst, funktioniert wie folgt:

Bei zunehmender Erwärmung der Flüssigkeit im Sonnenkollektor 3 (Fig. 1) steigt die Temperatur der Flüssigkeit an, bis sie 13 °C erreicht. Die Schieber 15 und 15' der beiden Ventile 9 und 10 bleiben bis zu dieser Temperatur in den folgenden Stellungen:
- Der Schieber 15 des Ventils 9 sperrt die Kammer 25 ab und hält die Kammer 16 offen, da sich der Thermostat 17 in seiner "eingezogenen" Stellung befindet. Der Flüssigkeitsstrom fliesst vom Einlass 12 zum Auslass 14 und zum Einlass 12' des Ventils 10.
   Auch der Schieber 15' des Ventils 10 befindet sich in der Stellung, die der "eingezogenen" Stellung des Thermostaten 17' entspricht, so dass der Schieber 15' die Kammer 25' des Ventils 10 geschlossen und die Kammer 16' offen hält. Die Flüssigkeit fliesst daher durch die Kammer 16' und durch den Auslass 14', an den der äusserste getrennte Speicherkreislauf 7 angeschlossen ist. Die Flüssigkeit zirkuliert also durch die äusserste Rohrschlange und gibt die Wärme an das umgebende Erdreich ab.
- Sobald bei weiterem Temperaturanstieg der Flüssigkeit im Sonnenkollektor 3 die Temperatur von 13°C überschreitet, verschiebt der für den Reaktionstemperaturbereich von 13°C bis 15°C gewählte und geeichte Thermostat 17' den Schieber 15' aus seiner bisherigen Stellung in seine andere Endstellung, nämlich in die "ausgefahrene" Stellung des Thermostaten 17', in welcher die Kammer 25' offen steht und die Kammer 16' abgesperrt ist. Diese Verschiebung des Thermostaten erfolgt gemäss der Erfindung innerhalb eines Temperaturbereichs von höchstens 3°C. im beschriebenen Beispiel erfolgt die Verschiebung des Schiebers innerhalb eines Temperatur-Schwankungsbereichs von 3°C, d.h. zwischen 13°C und 15°C, so dass bei einer Temperatur von 15°C an der gesamte Flüssigkeitsstrom durch den Auslass 13' des Ventils 10 und in den getrennten Kreislauf 6 des Energiespeichers fliesst, wobei er seine Energie an den ringförmigen mittleren Bereich des Speichers abgibt. Diese Phase dauert an, solange die Temperatur der Flüssigkeit unter 33°C bleibt.
- Sobald bei weiterer Fortsetzung der Erwärmung der Flüssigkeit im Sonnenkollektor 3 die Temperatur von 33°C erreicht hat, verschiebt der für einen Reaktionsbereich zwischen 33°C und 35°C gewählte und geeichte Thermostat 17 den Schieber 15 des Ventils 9 aus seiner Stellung in der die Kammer 25 abgesperrt und die Kammer 16 geöffnet sind - wobei diese Stellung der "eingezogenen" Stellung des Thermostaten 17 entspricht - in die entgegengesetzte Stellung, in welcher die Kammer 16 geöffnet wird. Die Flüssigkeit beginnt bei einer Temperatur zwischen 33°C und 35°C auch durch den Auslass 13 zu fliessen und durch den innersten getrennten Kreislauf 5. Die am meisten erwärmte Flüssigkeit sammelt sich also im innersten Teil des Wärmespeichers. Von dieser Temperatur an aufwärts fliesst die erwärmte Flüssigkeit daher immer in den innersten Kreislauf 5 und speichert seine Wärme in den entsprechenden Bereich des Erdreichs ein.
   Die Wiedergewinnung von Wärme aus dem Wärmespeicher, d.h. aus dem Erdreich, erfolgt einfach dadurch, dass die Flüssigkeit in umgekehrter Reihenfolge und in umgekehrter Richtung durch die getrennten Kreisläufe geschickt wird, beginnend mit der wärmsten Flüssigkeit des innersten Kreislaufs hin zur kälteren Flüssigkeit der äusseren Kreisläufe. Die Ventile 9 und 10 wechseln dabei automatisch von ihrer "ausgefahrenen" in die "eingefahrene" Stellung, wie bereits beschrieben, wenn die Temperatur der Flüssigkeit in den Reaktions-Temperaturbereich mit den bei den einzelnen Thermostaten genannten Grenztemperaturen absinkt.

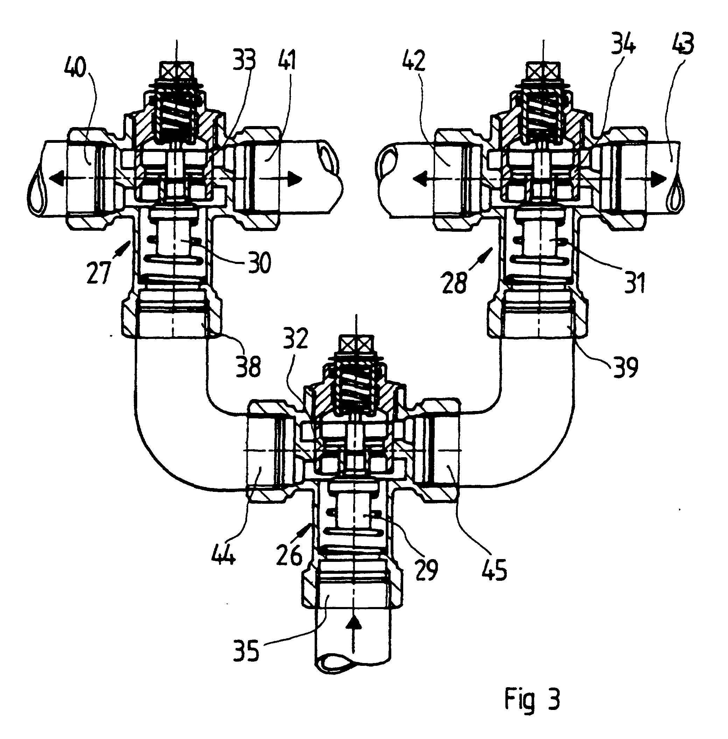

In der Fig. 3 ist eine erste bevorzugte Variante des Verteilers für den Flüssigkeitsstrom gemäss der vorliegenden Erfindung dargestellt, die sich von der vorher unter Bezugnahme auf die Figuren 1 und 2 beschriebenen lediglich darin unterscheidet, dass sie zusätzlich ein weiteres Dreiwegventil aufweist, d.h. drei statt zwei, und dass sie somit einen Energiespeicher speisen kann, der vier getrennte Kreisläufe statt nur deren drei umfasst. Die Anordnung von vier getrennten Kreisläufen im Speicher hat sich für viele praktische Anwendungsfälle als ideal erwiesen, wobei jedoch im Rahmen der vorliegenden Erfindung keine Begrenzung der vorsehbaren Anzahl getrennter Kreisläufe gegeben ist. Die Grenzen ergeben sich lediglich aus der Wirtschaftlichkeit einer solchen Anlage, die umso kostspieliger wird, je grösser die Zahl der eingesetzten getrennten Kreisläufe gewählt wird, auch wenn ihr Wirkungsgrad immer noch zunehmen kann.

Die drei Dreiwegventile 26, 27 und 28 der in der Fig. 2 gezeigten Bauart sind sowohl in ihrem Aufbau als auch in ihrer Funktion gleich wie die bereits beschriebenen Ventile 9 und 10. Dabei versteht sich von selbst, dass die vorliegende Erfindung nicht auf die Verwendung von Dreiwegventilen der beschriebenen Art eingeschränkt ist, deren Vorteil darin zu sehen ist, dass sie mit einem einzigen Pressteil aus Messing in einer minimalen Zahl von Arbeitsschritten hergestellt werden können. Andere Typen von Dreiwegventilen, die ebenfalls einen Einlass aufweisen und zwei Auslässe, die wechselweise mittels eines Schiebers geöffnet bzw. geschlossen werden können, der mit hoher Empfindlichkeit auf die Temperatur der durchströmenden Flüssigkeit reagiert, so dass der Schieber infolge einer sehr geringen Temperaturabweichung (von erfindungsgemäss nicht mehr als 3°C) von einer Endlage zur anderen (d.h. aus einer Stellung, in der einer der Auslässe geschlossen und der andere geöffnet ist) verschoben werden kann, ohne weiteres im Rahmen der vorliegenden Erfindung ebenfalls in Betracht gezogen werden.

Analog zum bereits gesagten wird jedoch die Anwendung von Ausdehnungs-Thermostatventilen der unter Bezugnahme auf die Figuren 1 und 2 beschriebenen Ausführungsform und auch in der unter Bezugnahme auf die Fig. 3 beschriebenen Ausführungsform, im Rahmen der vorliegenden Erfindung vorgezogen, da sie den Einsatz jeder Art von äusserer Energieversorgung zur Umschaltung der Ventile erübrigt. Hingegen kann die vorliegende Erfindung beispielsweise auch mit Hilfe von elektromagnetischen, temperaturgesteuerten Dreiwegventilen realisiert werden, die mit einem Temperaturfühler versehen sind, der die Temperatur der durchströmenden Flüssigkeit misst und die Umschaltung des Ventils veranlasst, sobald eine zum voraus festgelegte Umschalt-Temperatur erreicht wird. Zu unterstreichen ist jedoch, dass die Anwendung von Dreiwegventilen, die wie jene in den beschriebenen Beispielen keiner äusseren Energieversorgung bedürfen, für die Anwendung Art in Anlagen, für welche der erfindungsgemässe Verteiler für Flüssigkeitsströme hauptsächlich vorgesehen ist, nämlich auf dem Gebiet der Sonnenenergie-Heizungsanlagen, einen grossen Vorteil darstellt, besonders weil die Unabhängigkeit von äusseren Energiequellen für die Steuerung der Anlage über einen Kosteneinsparungsfaktor hinaus auch einen nicht unwesentlichen Faktor der Funktionssicherheit bildet. Sie ist somit eine bevorzugte Lösung im Rahmen der vorliegenden Erfindung.

Die Ventile 26, 27 und 28 in der Fig. 3 sind mit Thermostaten 29, 30 und 31 ausgerüstet, die - im Sinn eines Beispiels zur besseren Erklärung der Funktionsweise des Verteilers gemäss der Fig. 3 - in den folgenden Temperaturbereichen ansprechen (wobei mit diesem Ausdruck ein Bereich der Temperatur verstanden sein soll, innerhalb welchem der Thermostat den entsprechenden Schieber 32, 33 bzw. 34 aus einer Endstellung in die entgegengesetzte verschiebt):
Thermostat 29 des Ventils 26: Ansprech-Temperaturbereich: 23+25°C
Thermostat 30 des Ventils 27: Ansprech-Temperaturbereich: 13+55°C
Thermostat 31 des Ventils 28: Ansprech-Temperaturbereich: 33+35°C

Das Ventil 26 ist über seinen Einlass 35 mit der Energiequelle 3 (Fig. 1) verbunden, während seine beiden Auslässe 36 bzw. 37 mit dem Einlass 38 des Ventils 27 bzw. mit dem Einlass 39 des Ventils 28 verbunden sind.

Die Auslässe 40 und 41 des Ventils 27, bzw. 42 und 43 des Ventils 28, sind je mit einem der vier getrennten Wärmespeicher-Kreisläufe (nicht dargestellt) verbunden, welche einen im Prinzip dem Wärmespeicher 4 gleichenden, gemäss der Fig. 1 aufgebauten Speicher bilden, der jedoch mit vier statt drei getrennten "konzentrischen" Kreisläufen ausgestattet ist.

Der Verteiler für einen Flüssigkeitsstrom gemäss der Fig. 3 funktioniert analog zu dem unter Bezugnahme auf die Figuren 1 und 2 beschriebenen Ausführungsbeispiel. Aus dem Auslass 40 des Ventils 27 fliesst Flüssigkeit mit einer Temperatur unter 15°C, aus dem Auslass 41 des Ventils 27 fliesst Flüssigkeit mit einer Temperatur zwischen 15 und 25°C (abgesehen von der kurzen Zeitspanne, während der die Umschaltung des Ventils erfolgt, während welcher die Flüssigkeit wie bereits beschrieben aus beiden Auslässen des Ventils austreten kann), während aus den Auslässen 42 bzw. 43 des Ventils 28 Flüssigkeit mit einer Temperatur zwischen 25 und 35°C bzw. über 35°C austritt.

Diese Anordnung erlaubt eine Verteilung der von der Wärmeenergiequelle 3 herkommenden Flüssigkeit auf vier getrennte Kreisläufe (nicht gezeigt), von denen jeder bestimmte thermische Eigenschaften aufweist und (bezüglich Temperatur) nur in genau bestimmten Temperaturbereichen von höchstens 3°C und vorzugsweise von höchstens 2°C überlappt. Gemäss einer weiteren bevorzugten Ausführungsform der vorliegenden Erfindung ist jedes der Ventile 9, 10, 26, 27 und 28 mit einer Einstellvorrichtung ausgerüstet, mittels welcher die Arbeitstemperatur jedes Ventils fein eingestellt werden kann.

Im Allgemeinen werden die Ausdehnungs-Thermostatventile der in den Figuren 1, 2 und 3 gezeigten Bauart, die einen im Rahmen der vorliegenden Erfindung bevorzugten Ventiltyp darstellen, werkseitig auf einen bestimmten Ansprech-Temperaturbereich, wie er im Lauf der Beschreibung der Ausführungsbeispiele erklärt wurde, voreingestellt geliefert. Dabei ist jedoch vorzuziehen, dass jedes Ventil mit einem eigenen Temperatur-Einstellsystem versehen ist, mit dessen Hilfe die Ansprechtemperatur fein eingestellt werden kann, um das Ventil den praktischen Betriebsbedingungen des Verteilers besser anpassen zu können. Ein für das Ventil 9, 10, 26, 27 bzw. 28 geeignetes Feineinstell-System ist im Sinne eines Beispiels in der Fig. 2 dargestellt. Die Büchse 19, in welcher der Stift 18 des Thermostaten 17 sitzt, ist an dem mit einem Gewinde versehenen Deckel 22 befestigt, der seinerseits im Ventilkörper 11 mittels eines Gewindes 46 eingeschraubt ist, und der femer mit einem abdichtenden Dichtungsring versehen ist. Wird die Büchse 19 nun mittels der Vierkantmutter 48 mehr oder weniger weit in den Deckel 22 eingeschraubt, so kann dadurch der von der Druckfeder 49 nach oben auf den Thermostaten 17 ausgeübte Druck etwas verändert werden, so dass die zur Verschiebung des Schiebers 15 aus seiner unteren Anschlagstellung in die obere Anschlagstellung erforderliche Kraft des Thermostaten 17 beeinflusst wird. Damit wird auch die Arbeitstemperatur des Thermostaten 17 beeinflusst, bei welcher er den Schieber 15 in Abhängigkeit von der Kraft, mit der dieser in seiner Ruhestellung (am Ventil 9 in der Fig. 2 gezeigt) gegen seinen Anschlag gedrückt wird, zu verschieben beginnt.

Die vorliegende Erfindung ist hier im Zusammenhang mit einem Solar-Heizungssystem mit einem im Erdreich untergebrachten Energiespeicher unter Bezugnahme auf die Figuren beschrieben worden, der mehrere getrennte Kreisläufe umfasst, die je mit Flüssigkeit von einer genau bestimmten Temperatur gespeist werden.

Hier sei jedoch festgehalten, dass diese Anwendung der vorliegenden Erfindung nicht die einzige denkbare Anwendungsmöglichkeit des erfindungsgemässen Verteilers darstellt, da dieser vor allem dort anwendbar ist, wo es darum geht, mehrere getrennte Kreisläufe in einer Heizungsanlage mit Flüssigkeit von jeweils einer genau bestimmten Temperatur zu speisen.

## Patentansprüche

1. Verteiler für einen Flüssigkeitsstrom in einer Heizungsanlage mit einer Energiequelle (3) und einem Energiespeicher (4), der aus mindestens drei getrennten Kreisläufen (5, 6, 7) besteht, in welchen die Flüssigkeit mit voneinander getrennten, aber einander benachbarten Temperaturbereichen zirkuliert,
**dadurch gekennzeichnet, dass**
der Verteiler für den Flüssigkeitsstrom Dreiwegventile in einer Anzahl, kleiner um eine Einheit gegenüber der Anzahl der getrennten Kreisläufe, umfasst (9, 10, 26, 27, 28), von denen jedes einen Einlass (12, 35) und zwei Auslässe (13, 14; 40, 41, 42, 43) umfasst und mit einem Schieber (15, 32, 33, 34) ausgerüstet ist, der wechselweise den einen Auslass absperren und den anderen offen halten kann, oder umgekehrt,
wobei ein erstes Ventil (9, 26) über seinen Einlass (14, 44) mit der Energiequelle (3) verbunden ist, während einer seiner Auslässe (14; 44) mit dem Einlass eines zweiten Ventils (10; 27) verbunden ist und der andere Auslass (13; 45) mit einem der getrennten Kreisläufe (5, 6, 7) des Energiespeichers (3) verbunden ist, und wobei das zweite Ventil (10; 27) über seine zwei Auslässe (13', 14'; 40, 41) mit einem zweiten bzw. dritten getrennten Kreislauf des Speichers verbunden ist und wobei jedes der Ventile (9, 10; 26, 27, 28) mit einem Thermostaten (17, 17'; 29, 30, 31) ausgerüstet ist, der den entsprechenden Schieber (15, 15'; 29, 30, 31) in solcher Weise betätigt, dass er diesen aus der Stellung, in der einer der Auslässe (13, 13'; 40, 42, 44) abgesperrt ist, in die Stellung verschiebt, in welcher der andere Auslass (14, 14'; 41, 43, 45) abgesperrt ist, sobald die Temperatur in seinen Arbeitsbereich von weniger als 3°C und vorzugsweise von 2°C zu liegen kommt.

2. Verteiler für einen Flüssigkeitsstrom in Verbindung mit einem Energiespeicher, **dadurch gekennzeichnet, dass** der Energiespeicher aus vier getrennten Kreisläufen besteht, und dass der Verteiler für den Flüssigkeitsstrom drei Dreiwegventile (26, 27, 28) umfasst, wobei ein erstes Ventil (26) über seinen Einlass mit der Energiequelle (3) verbunden ist und seine beiden Auslässe mit dem Einlass des zweiten Ventils und jenem des dritten Ventils (28) verbunden sind, und wobei die Auslässe des zweiten Ventils (27) und des dritten Ventils (28) je mit einem der getrennten Kreisläufe des Speichers verbunden sind,
wobei die Arbeitstemperatur des Thermostaten (29) des ersten Ventils (26) höher als die Arbeitstemperatur des Thermostaten (30) des zweiten Ventils (27) und tiefer als die Arbeitstemperatur des Thermostaten (31) des dritten Ventils (28) liegt, wobei
die getrennten Kreisläufe (5,6,7) von im Erdreich unter dem Gebäude ausgelegten Rohrschlangen gebildet werden, wobei die erste Rohrschlange (5), die von der wärmsten Flüssigkeit durchströmt ist und sich in einer horizontalen Ebene, vom Zentrum ausgehend, als Spirale um sich selbst windet, und die zweite Rohrschlange (6), die den zweiten, gegenüber der ersten Rohrschlange (5) weniger warmen, aber gegenüber jener der dritten (7) wärmeren Flüssigkeit durchströmten Speicherkreislauf bildet, in der gleichen horizontalen Ebene ausgelegt ist, und
wobei alle weiteren Speicherkreisläufe auch von spiralförmigen Rohrschlangen gebildet werden, die jeweils in der gleichen Ebene um die vorhergehende Rohrschlange gewunden sind.

3. Verteiler für einen Flüssigkeitsstrom gemäss dem Anspruch 2,
**dadurch gekennzeichnet, dass**
die Arbeitstemperatur des Thermostaten (29) des ersten Ventils (26) zwischen 23°C und 25°C liegt, die Arbeitstemperatur des Thermostaten (30) des zweiten Ventils (27) zwischen 13°C und 15°C liegt und die Arbeitstemperatur des Thermostaten (31) des dritten Ventils (28) zwischen 33°C und 35°C liegt

4. Verteiler für einen Flüssigkeitsstrom gemäss dem Anspruch 1,
**dadurch gekennzeichnet, dass**
die Dreiwegventile (9, 10; 26, 27, 28) mit Ausdehnungs-Thermostaten (17, 17'; 29, 30, 31) ausgerüstet sind, die auf die Temperatur der durchströmenden Flüssigkeit reagieren.

5. Verteiler für einen Flüssigkeitsstrom gemäss dem Anspruch 1,
**dadurch gekennzeichnet, dass**
jedes der Dreiwegventile (9, 10; 26, 27, 28) mit einer Einstellvorrichtung versehen ist, mittels welcher die Arbeits-Temperatur angepasst werden kann.

6. Anwendung des Verteiler für einen Flüssigkeitsstrom gemäss einem der vorhergehenden Ansprüche,
**dadurch gekennzeichnet, dass**
die Heizungsanlage eine Sonnenenergie-Anlage ist, deren Energiequelle (3) von einem System von Sonnenkollektoren gebildet wird, die auf dem Dach (2) und/oder an den Wänden des zu beheizenden Gebäudes angebracht sind, und deren Energiespeicher (4) von mindestens drei getrennten Kreisläufen (5, 6, 7) gebildet wird, durch welche die Flüssigkeit in jeweils voneinander getrennten, aber benachbarten Temperaturbereichen zirkuliert.

7. Anwendung des Verteiler für einen Flüssigkeitsstrom gemäss dem Anspruch 6,
**dadurch gekennzeichnet, dass**
der Energiespeicher (4) mindestens vier getrennte Kreisläufe umfasst, und dass der Verteiler für den Flüssigkeitsstrom mindestens drei Dreiwegventile (26, 27, 28) umfasst.

## Claims

1. Distributor for a liquid flow in a heating system comprising an energy source (3) and an energy store (4) which consists of at least three separate circuits (5, 6, 7) in which the liquid circulates with temperature ranges separate from one another but adjacent to one another, **characterized that** the distributor for the liquid flow includes three-way valves in a number smaller by one unit than the number of separate circuits (9, 10, 26, 27, 28) of which each three-way valve has an inlet (12, 35) and two outlets (13, 14; 40, 41, 42, 43) and is equipped with a spool (15, 32, 33, 34) which alternately blocks one outlet and keeps the other open or vice versa, wherein a first valve (9, 26) is connected via its inlet (4, 44) to the energy source (3) while one of its outlets (14; 44) is connected to the inlet of a second valve (10; 27) and the other outlet (13; 45) is connected to one of the separate circuits (5, 6, 7) of the energy store (3), wherein the second valve (10; 27) is connected via its two outlets (13', 14'; 40, 41) to a second and third separate circuit of the store respectively and wherein each of the valves (9, 10; 26, 27, 28) is equipped with a thermostat (17, 17'; 29, 30, 31) which actuates the corresponding spool (15, 15'; 29, 30, 31) in such a manner that it shifts the latter out of the position in which one of the outlets (13, 13'; 40, 42, 44) is closed off into the position in which the other outlet (14, 14'; 41, 43, 45) is closed off as soon as the temperature comes to lie in its working range of less than 3°C and preferably of less than 2°C.

2. Distributor for a liquid flow in connection with an energy store, **characterised in that** the energy store consists of four separate circuits and **in that** the distributor for the liquid flow includes three three-way valves (6, 26, 28), with a first valve (26) being connected by its inlet to the energy source (3) and its two outlets being connected to the inlet of the second valve and to that of the third valve (28) and with the outlets of the second valve (27) and of the third valve (28) each being connected to one of the separate circuits of the store, wherein the working temperature of the thermostat (29) of the first valve (26) is higher than the working temperature of the thermostat (30) of the second valve (27) and lower than the working temperature of the thermostat (31) of the third valve (28), wherein the separate circuits (5, 6, 7) are formed by pipe snakes laid in the ground beneath the building, wherein the first pipe snake (5) through which the warmest liquid flows winds in a spiral about itself in a horizontal plane starting at the centre and wherein the second pipe snake (6), which forms the second storage circuit through which liquid flows which is less warm than the first pipe snake (5) but warmer than that of the third pipe snake (7), is laid out in the same horizontal plane and wherein all further storage circuits are also formed by spiral shaped pipe snakes which respectively wind in the same plane about the preceding pipe snake.

3. Distributor for a liquid flow in accordance with claim 2, **characterised in that** the working temperature of the thermostat (29) of the first valve (26) lies between 23°C and 25°C, the working temperature of the thermostat (30) of the second valve (27) lies 13°C and 15°C and the working temperature of the thermostat (31) of the third valve (28) lies between 33°C and 35°C.

4. Distributor for liquid flow in accordance with claim 1, **characterised in that** the three-way valves (9, 10; 26, 27, 28) are equipped with expansion thermostat (17, 17'; 29, 30, 31) which react to the temperature of the through-flowing liquid.

5. Distributor for liquid flow in accordance with claim 1, **characterised in that** each of the three-way valves (9, 10; 26, 27, 28) is provided with a setting device by means of which the working temperature can be adapted.

6. Use of the distributor for a liquid flow in accordance with any one of the preceding claims, **characterised in that** the heating system is a solar energy system, the energy source (3) of which is formed by a system of solar collectors which are mounted on the roof or on the walls of the building to be heated and the energy stores (4) of which are formed by least three separate circuits (5, 6, 7) through which the liquid circulates in temperature ranges which are respectively separate from but adjacent to one another.

7. Use of the distributor for a liquid flow in accordance with claim 6, **characterised in that** the energy store (4) includes least four separate circuits and **in that** the distributor for the liquid flow includes at least three three-way valves (26, 27, 28).

## Revendications

1. Répartiteur d'un courant de liquide dans une installation de chauffage comprenant une source (3) d'énergie et un dispositif (4) d'accumulation d'énergie, qui est constitué d'au moins trois circuits (5, 6, 7) distincts dans lesquels le liquide circule en ayant des plages de température distinctes les unes des autres mais voisines les unes des autres, **caractérisé en ce que**
le répartiteur pour le courant de liquide comprend (9, 10, 26, 27, 28) des vannes à trois voies en un nombre inférieur d'une unité au nombre des circuits distincts, chacune d'entre elles ayant une entrée (12, 35) et deux sorties (13, 14 ; 40, 41, 42, 43) et un tiroir (15, 32, 33, 34), qui en alternance peut obturer l'une des sorties et ouvrir l'autre ou inversement.
une première vanne (9, 26) communiquant par son entrée (14, 44) avec la source d'énergie, tandis qu'une autre de ses sorties (14, 44) communique avec l'entrée d'une des deuxièmes vannes (10, 27) et l'autre sortie (13, 45) communique avec l'un des circuits (5, 6, 7) distincts du dispositif (3) d'accumulation d'énergie et la deuxième vanne (10, 27) communique par ses deux sorties (13', 14'; 40, 41) avec un deuxième ou un troisième circuit distinct du dispositif d'accumulation et chacune des vannes (9, 10 ; 26, 27, 28) est munie d'un thermostat (17, 17', 29, 30, 31) qui actionne le tiroir (15, 15' ; 29, 30, 31) correspondant de telle façon qu'il le fait passer de la position dans laquelle il obture l'une des sorties (13, 13'; 40, 42, 44) à la position dans laquelle il obture l'autre sortie (14, 14' ; 41, 43, 45) dès que la température vient dans sa zone de travail de moins de 3°C et de préférence de 2°C.

2. Répartiteur pour un courant de liquide en liaison avec un dispositif d'accumulation d'énergie, **caractérisé en ce que**
l'accumulateur d'énergie est constitué de quatre circuits distincts et **en ce que** le répartiteur pour le courant de liquide comprend trois vannes (26, 27, 28) à trois voies, une première vanne (26) communiquant par son entrée avec la source (3) d'énergie et ses deux sorties communiquant avec l'entrée de la deuxième vanne et celle de la troisième vanne (28) et les sorties de la deuxième vanne (27) et de la troisième vanne (28) communiquant respectivement avec l'un des circuits distincts du dispositif d'accumulation,
la température de travail du thermostat (29) de la première vanne (26) étant plus haute que la température de travail du thermostat (30) de la deuxième vanne (25) et plus basse que la température de travail du thermostat (31) de la troisième vanne (28), dans lequel
les circuits (5, 6, 7) distincts sont formés de serpentin mis en terre sous le bâtiment, le premier serpentin (5) dans lequel passe le liquide le plus chaud et qui s'enroule de soi-même en spirale dans un plan horizontal en partant du centre et le deuxième serpentin (6), qui forme le deuxième circuit du dispositif d'accumulation dans lequel passe du liquide moins chaud que dans le premier serpentin (5) mais plus chaud que dans le troisième serpentin (7), est posé dans le même plan horizontal et tous les autres circuits du dispositif d'accumulation sont formés aussi de serpentins en forme de spirale qui sont enroulés respectivement dans le même plan autour de la spirale précédente.

3. Répartiteur pour un courant de liquide suivant la revendication 2,
**caractérisé en ce que** la température de travail du thermostat (29) de la première vanne (26) est comprise entre 23°C et 25°C, la température de travail du thermostat (30) de la deuxième vanne (27) est comprise entre 13°C et 15°C et la température de travail du thermostat (31) de la troisième vanne (28) est comprise entre 33°C et 35°C.

4. Répartiteur pour un courant de liquide suivant la revendication 1,
**caractérisé en ce que**
les vannes (9, 10 ; 26, 27, 28) à trois voies sont munies de thermostats (17, 17', 29, 30, 31) à dilatation qui réagissent à la température du liquide qui passe.

5. Répartiteur pour un courant de liquide suivant la revendication 1,
**caractérisé en ce que**
chacune des vannes (9, 10 ; 26, 27, 28) à trois voies est munie d'un dispositif de réglage au moyen duquel on peut adapter la température de travail.

6. Utilisation du répartiteur pour un courant de liquide suivant l'une des revendications précédentes,
**caractérisé en ce que**
l'installation de chauffage est une installation d'énergie solaire dont la source (3) d'énergie est formée par un système de collecteurs solaires qui sont montés sur le toit (2) et/ou sur les murs du bâtiment à chauffer et dont le dispositif (4) d'accumulation d'énergie est formé d'au moins trois circuits (5, 6, 7) distincts dans lesquels le liquide circule dans des plages de température respectivement distinctes les unes des autres mais proches.

7. Utilisation du répartiteur pour un courant de liquide suivant la revendication 6,
**caractérisé en ce que**
le dispositif (4) d'accumulation d'énergie comprend au moins quatre circuits distincts et **en ce que** le répartiteur pour le courant de liquide comprend au moins trois vannes (26, 27, 28) à trois voies.
